# FASCICULE DE BREVET EUROPEEN

(11) **EP 2 126 319 B1**
(45) Date de publication et mention de la délivrance du brevet: **03.08.2011**
(21) Numéro de dépôt: 08761908.6
(22) Date de dépôt: 09.01.2008
(51) Int. Cl.: B60W 30/18, B60W 10/06, F02D 41/00

(54) **PROCEDE DE CONTROLE DU FONCTIONNEMENT D'UN GROUPE MOTO-PROPULSEUR**
VERFAHREN ZUR STEUERUNG DES BETRIEBS EINES LEISTUNGSEINHEITSGRUPPE
METHOD FOR CONTROLLING THE OPERATION OF A POWER UNIT GROUP

(30) Priorité: 24.01.2007 FR 0700475
(43) Date de publication de la demande: 02.12.2009
(73) Titulaire: Renault SAS, 92100 Boulogne Billancourt (FR)
(72) Inventeur: HABERT, Patrice, F-92160 Antony (FR); VIGERIE, Eric, F-78960 Voisins Le Bretonneux (FR)
(86) Numéro de dépôt international: PCT/FR2008/050033
(87) Numéro de publication internationale: WO 2008/107581

(56) Documents cités:
- EP-A1- 0 189 050
- WO-A-03/039903
- WO-A-2007/057194
- DE-A1-102004 009 233
- FR-A- 2 771 137
- FR-A- 2 809 059
- FR-A1- 2 851 629
- US-A1- 2003 055 551

## Description

L'invention a pour objet un procédé de contrôle du fonctionnement d'un groupe moto-propulseur de véhicule à commande manuelle de la boîte de vitesses.

D'une façon générale, un groupe moto-propulseur de véhicule comporte un moteur d'entrainement, un embrayage et une boite de vitesses à plusieurs rapports, à commande manuelle ou automatique.

Dans le cas d'une boite de vitesses à commande automatique, le changement de rapport est piloté par un système de contrôle qui détermine le rapport à engager en fonction de la vitesse du véhicule, du régime du moteur et de la charge appliquée sur celui-ci et en tenant compte de la volonté du conducteur exprimée, par exemple, par la position de la pédale d'accélération qui correspond à une consigne cible de puissance.

On sait, en effet, que le rapport de démultiplication de la boîte de vitesses doit permettre de faire tourner le moteur à une vitesse optimale compte-tenu de la vitesse de rotation des roues, c'est-à-dire de la vitesse d'avancement du véhicule et du couple demandé, en maintenant une réserve de puissance permettant au conducteur de faire face aux différentes situations de conduite, par exemple en montée, en descente avec frein-moteur, en procédure de dépassement ou de freinage brutal, etc.

On peut ainsi définir, en fonction du type du moteur, différentes lois de passage des vitesses, soit vers un rapport plus élevé, soit vers un rapport plus faible.

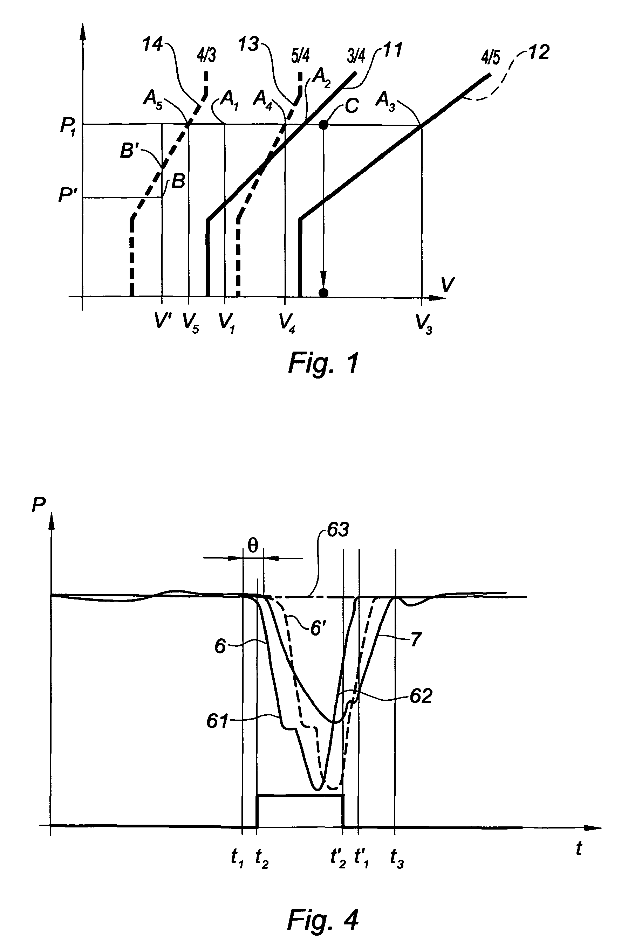

De telles lois de passage sont représentées, à titre d'exemple, sur la figure 1 qui est un diagramme indiquant, pour une puissance demandée, exprimée par la position de l'accélérateur indiquée en ordonnée, la vitesse du véhicule, indiquée en abscisse, à partir de laquelle il y a lieu de changer de rapport.

Par exemple, à partir d'un point A₁ pour lequel la troisième vitesse est enclenchée et correspondant à une vitesse V₁ du véhicule, l'enfoncement P₁ de la pédale d'accélérateur commande une montée en vitesse progressive du véhicule avec, pour une position constante de la pédale, un passage en quatrième au point A₂ à la vitesse V₂ puis en cinquième au point A₃, à la vitesse V₃.

Si le véhicule ralentit, par exemple dans une rampe, sans action sur la pédale d'accélérateur, il faut repasser de cinquième en quatrième au point A₄, à la vitesse V₄, puis de quatrième en troisième au point A₅, à la vitesse V₅.

De même, à partir d'un point B correspondant à une vitesse V' du véhicule et à une position P' de la pédale d'accélérateur, pour maintenir cette vitesse V', par exemple dans une rampe, en augmentant le couple demandé, il faut enfoncer la pédale d'accélérateur et rétrograder de quatrième en troisième au point B'.

Sur le diagramme, les courbes en traits pleins 11 et 12 correspondent respectivement au passage de troisième en quatrième et de quatrième en cinquième et les courbes en tirets 13 et 14 correspondent respectivement au passage de cinquième en quatrième et de quatrième en troisième.

De telles lois de passage peuvent être programmées dans le système de contrôle d'un embrayage automatique afin de commander le changement de rapport à partir d'une information de volonté du conducteur exprimée par la position de la pédale d'accélération.

Dans un véhicule à commande manuelle de la boîte de vitesses, le conducteur apprécie lui-même le moment de monter en vitesse ou de rétrograder par exemple en surveillant le bruit de son moteur ou en s'aidant, éventuellement, d'un compte-tours afin de choisir le rapport de démultiplication optimal correspondant à un compromis acceptable entre diverses exigences, bruit, reprise, consommateur en carburant.

Depuis quelques temps, cependant, il est apparu que le fonctionnement d'un groupe moto-propulseur de véhicule devait être contrôlé de façon plus précise et pour d'autres raisons, en particulier pour diminuer la consommation en carburant ou la pollution par émission de composés nuisibles. D'ailleurs, la réglementation devient plus exigeante à cet égard.

Cependant, de tels impératifs s'imposent aussi aux véhicules à boîte de vitesses manuelle dont le fonctionnement du groupe moto-propulseur doit donc également être contrôlé de façon plus précise qu'auparavant. Pour cela, le véhicule peut avantageusement être équipé de moyens d'aide à la conduite permettant de préconiser au conducteur un changement de rapport ou de vérifier si le rapport engagé est adapté au régime du moteur, à la vitesse du véhicule et à la puissance demandée. Un simple compte-tours est, alors, insuffisant et il devient préférable, même dans un véhicule à boîte manuelle, de disposer d'un système de contrôle avec calculateur donnant les indications nécessaires au conducteur.

De tels systèmes de contrôle avaient déjà été prévus depuis longtemps pour les poids lourds, en particulier afin de réduire la consommation en carburant.

Le document FR-A-2 431 737, par exemple, décrit un dispositif de ce type comportant un calculateur tenant compte, par exemple, des valeurs instantanées du régime du moteur, de la vitesse du véhicule et de la charge, mesurées par des capteurs, pour afficher de façon visuelle ou sonore, des indications relatives à la consommation en carburant et, le cas échéant, la nécessité de monter ou descendre le rapport de la boîte de vitesses.

En particulier, un tableau lumineux sur lequel sont indiquées différentes courbes d'égale consommation en carburant, peut matérialiser le diagramme couple/régime de façon à permettre au conducteur de vérifier, à chaque instant, s'il se trouve dans une plage optimale de consommation.

Ces indications sont fournies par un calculateur en fonction du couple demandé au moteur par le conducteur qui peut être exprimé, par exemple, par la position de la pédale d'accélération.

D'autres capteurs peuvent indiquer, par exemple, le débit et la pression du carburant injecté, la pression d'admission d'air dans le moteur, la pression dans les chambres de combustion des cylindres, la température des gaz d'échappement etc, afin de surveiller différents paramètres de fonctionnement qui peuvent varier selon le type du moteur.

Mais de tels systèmes de contrôle en fonction de la volonté du conducteur peuvent aussi être utilisés pour commander un actuateur lent, dans le cas d'un moteur à turbo-compression, de façon à atteindre une consigne cible de couple.

L'invention a donc pour objet, d'une façon générale, un système de contrôle déterminant une puissance cible à fournir par le groupe moto-propulseur en fonction d'une information correspondant à la volonté du conducteur et s'exprimant, habituellement, par la position de la pédale d'accélération.

Il est apparu, cependant, qu'une simple prise en compte de cette position de pédale pouvait, dans le cas d'une commande manuelle, entraîner une manoeuvre inopportune, ne correspondant pas à la volonté réelle du conducteur.

Par exemple, le diagramme de la figure 1 montre que, pour une position P₁ de la pédale d'accélération, le système de contrôle préconise un passage en 4^{ème} lorsque la vitesse du véhicule arrive au point A₂. Dans le cas d'une commande manuelle de la boîte de vitesses, le conducteur qui voit s'afficher, sur son tableau de bord, le rapport de 4^{ème} préconisé, lève le pied de l'accélérateur après un court temps de réaction, par exemple au point C, pour passer en 4^{ème}. La vitesse V restant sensiblement constante, le système de contrôle qui tient compte uniquement de l'information constituée par l'enfoncement de la pédale d'accélération va donc préconiser un passage en 5^{ème} au niveau de la ligne 12 du diagramme et cette fausse indication peut perturber le conducteur en lui préconisant un rapport non souhaitable.

De même, dans un moteur à turbo-compression utilisant un actuateur lent commandé par une consigne lente basée sur la consigne cible de couple, cette consigne chute lors d'un changement de rapport au moment où le conducteur lève son pied de l'accélérateur et ceci va induire un retard de mise en action du turbo lorsque le conducteur redemande une consigne de couple.

L'invention a pour objet un nouveau procédé permettant de formater l'information de volonté affichée à l'entrée du calculateur, de façon à éviter de tels inconvénients

Conformément à l'invention, en effet, lors d'un changement de rapport, l'information de volonté du conducteur est figée pendant le temps d'ouverture de l'embrayage, de façon que le système de contrôle ne puisse pas tenir compte, le cas échéant, d'une information perturbatrice affichée sur le calculateur entre l'instant d'ouverture et l'instant de fermeture de l'embrayage, pour la détermination de la puissance cible à fournir.

De façon particulièrement avantageuse, l'information de volonté exprimée à chaque instant, par le conducteur, est retardée et le calculateur reçoit simultanément une information immédiate exprimée, à cet instant, par le conducteur et une information précédente retardée et, après comparaison, tient compte seulement de l'information correspondant à une augmentation de la puissance cible.

Dans un mode de réalisation préférentiel, le calculateur du système de contrôle détecte, à chaque instant, l'état ouvert ou fermé de l'embrayage et, à l'instant de détection de l'ouverture de l'embrayage, l'information de volonté retardée jusqu'à cet instant est figée jusqu'à l'instant de fermeture, l'information retardée ainsi maintenue à une valeur constante étant comparée en permanence à la valeur de l'information de volonté immédiate affichée à chaque instant, de façon à ne tenir compte que de la plus grande des deux valeurs pour la détermination de la puissance cible.

Avantageusement, le temps de retard imposé à l'information de volonté du conducteur est au moins égal au temps nécessaire à la détection de l'état ouvert de l'embrayage, et peut être, par exemple, de quelques dixièmes de secondes, de préférence de l'ordre de 300 millisecondes.

Dans le cas où l'information de volonté du conducteur est un signal correspondant à la position de la pédale d'accélérateur du véhicule, le système de contrôle ne tient pas compte d'une information perturbatrice résultant d'un levier de pied rapide de la pédale.

Dans le cas où l'information de volonté du conducteur est une consigne de puissance cible servant à la commande d'un actuateur lent pour un moteur à turbocompression, le système de contrôle ne tient pas compte, pour la commande de l'actuateur, d'une chute de la consigne cible résultant d'un levier de pied rapide de la pédale d'accélérateur pour le changement de vitesse.

D'autres caractéristiques avantageuses de l'invention apparaîtront dans la description suivante d'un mode de réalisation particulier, donné à titre d'exemple, en se référant aux dessins annexés.
La figure 1 est un diagramme couple/vitesse indiquant un exemple de lois de passage des vitesses dans le sens montant et descendant.
La figure 2 est un schéma de principe du formatage, selon l'invention, d'une information de volonté du conducteur.
La figure 3 montre l'évolution, selon les étapes du procédé, du signal d'information de volonté du conducteur.
La figure 4 est un diagramme pression/temps indiquant l'évolution de la consigne de pression pour un moteur à turbo-compresseur.

Comme indiqué plus haut, la figure 1 est un diagramme de type connu indiquant, pour un couple demandé exprimé par la position de l'accélérateur indiquée en ordonnée, la vitesse du véhicule, indiquée en abscisse, à partir de laquelle il y a lieu de changer de rapport, selon des lois de passage indiquées en ligne continue pour les rapports montants et en tirets pour les rapports descendants.

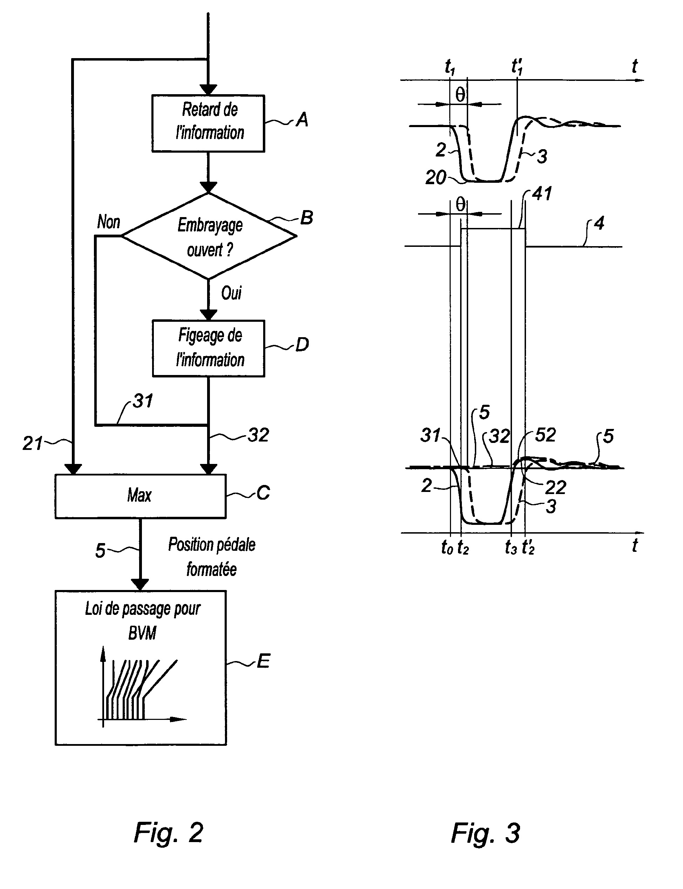

La figure 3 montre, en regard de chaque étape du procédé, l'évolution au cours du temps, du signal d'information indiqué en ordonnée et correspondant à la position de la pédale d'accélérateur.

La courbe 2 représente un lever de pied rapide correspondant à un palier bas 20 entre deux instants successifs t₁, t'₁.

Selon la première étape A du procédé, le signal d'information brut représenté par la courbe 2 sur la figure 3, est retardé, à chaque instant, d'un temps θ qui est au moins égal au temps nécessaire à la détection de l'état ouvert ou fermé de l'embrayage et peut être, par exemple, de 300 millisecondes. Ce signal retardé est représenté sur la figure 3 par la courbe en tirets 3.

A la deuxième étape B du procédé, l'état ouvert de l'embrayage est détecté par un capteur (logiciel ou physique) qui transmet au calculateur un signal représenté par la ligne 4.

Comme le montre la figure 2, tant que l'embrayage est fermé, le calculateur du système de contrôle reçoit simultanément, à chaque instant, deux signaux qui sont affichés sur un comparateur C, respectivement un signal 21 correspondant à l'information brute exprimée, à cet instant, par le conducteur et un signal 31 correspondant à une information précédente retardée du temps θ, de la façon indiquée sur la figure 3, en regard de l'étape A.

A l'étape B, un bloc de calcul du système de contrôle, vérifie l'état de l'embrayage. La ligne 4 de la figure 3 comporte ainsi un palier haut 41 entre l'instant t₂ d'ouverture de l'embrayage et l'instant t'₂ de fermeture.

Comme le montre la courbe 2 qui indique la variation du signal d'information affiché, à chaque instant, sur le comparateur C, l'instant t₂ de détection de l'état ouvert de l'embrayage est légèrement décalé par rapport à l'instant t₀ où le conducteur lève le pied de l'accélérateur.

Cependant, le signal 21 a été retardé d'un temps θ au moins égal au temps de détection t₀, t₂. Par conséquent, le signal retardé 31 dont la variation est représentée par la courbe 3 sur la figure 3, correspond encore à une position enfoncée de la pédale d'accélération à l'instant t₂ de détection de l'ouverture de l'embrayage.

Selon l'invention, à cette étape D, cette information 3 est figée et la valeur 32 du signal affichée sur le comparateur est donc maintenue constante à partir de l'instant t₂ et jusqu'à l'instant t'₂ de fermeture de l'embrayage.

Le comparateur C reçoit donc en permanence un signal immédiat 21 correspondant à la position instantanée de la pédale d'accélération et le signal retardé maintenu à sa valeur figée 32 et il affiche sur le calculateur E un signal de position formaté 5 correspondant à la plus grande des deux valeurs 21 et 32.

De la sorte, comme le montre la courbe 5 indiquée en trait mixte sur la figure 3, lorsque le conducteur lève le pied de l'accélérateur pour un débrayage, l'information de volonté 5 affichée sur le calculateur E n'est pas modifiée et est maintenue à la valeur qu'elle avait à l'instant t₀.

Cependant, si le conducteur demande un surcroit de puissance au moment d'embrayer, qui se traduit par un enfoncement 22 de la pédale, c'est cette valeur supérieure 52 qui est affichée, à partir de l'instant t₃, sur le calculateur E.

Ainsi, le calculateur prend en compte, à chaque instant, l'information de volonté correspondant à la puissance maximale souhaitée et ne risque pas de préconiser une montée en rapport prématurée qui se traduirait par une perte de puissance inopportune.

L'invention permet ainsi d'afficher sur le tableau de bord un rapport préconisé tenant compte des conditions réelles de circulation à chaque instant.

Mais l'invention peut aussi s'appliquer à la détermination d'une consigne de puissance cible optimale pour la commande d'actuateur lent dans un moteur à turbo compression.

La figure 4 est un diagramme pression/temps illustrant un exemple d'application de l'invention au cas d'un tel moteur dans lequel la pression de suralimentation est contrôlée par un actuateur lent commandé par une consigne de pression turbo liée à la volonté du conducteur et exprimée, par exemple, par la position de la pédale d'accélération.

L'information de volonté du conducteur se traduit donc par un signal de consigne affiché sur le calculateur. Sur la figure 4, la courbe 6 indique la variation au cours du temps de ce signal de consigne lors d'un changement de rapport qui entraîne un lever de pied de l'accélérateur à partir de l'instant t₁ et un débrayage qui est détecté avec un léger temps de retard.

Le lever de pied détermine une chute de la consigne de pression représentée par la partie 61 de la courbe 6, entre l'instant t₁ et l'instant t'₁. Il en résulte une diminution de la pression de suralimentation réelle dont la variation est représentée par la courbe 7 et qui détermine la masse d'air admise dans la chambre de combustion.

Au moment d'embrayer, le conducteur redemande de la puissance et la consigne de pression augmente à nouveau selon la partie 62 de la courbe 6 mais la pression de suralimentation réelle n'est atteinte qu'à l'instant t₃, avec un retard t'₁ t₃ du à la dynamique du système.

Le couple maximal réalisable étant proportionnel à la masse d'air admise, la demande de puissance conducteur peut être limitée transitoirement jusqu'à ce que la pression de suralimentation représentée par la courbe 7 s'établisse à la valeur de consigne représentée par la courbe 6, à l'instant t₃.

Selon l'invention, le signal d'information de volonté du conducteur est retardé d'un temps θ au moins égal au temps nécessaire à la détection de l'état de l'embrayage et dont la variation est représentée, sur la figure 4, par la courbe 6' qui est donc décalée vers la droite, de la valeur θ, par rapport à la courbe 6.

Les étapes du procédé sont les mêmes que précédemment et sont indiquées schématiquement sur la figure 2.

Comme indiqué à l'étape B, à l'instant t₂ de détection de l'état ouvert de l'embrayage, l'information retardée 6' est figée et maintenue à une valeur constante, selon la ligne 63 indiquée en trait mixte. Cette valeur figée 63 est comparée à la valeur instantanée du signal d'information 6, de façon à afficher sur le calculateur la valeur la plus grande. Ainsi, à l'instant t'₂ de fermeture de l'embrayage, le calculateur demandera immédiatement de la puissance afin d'obtenir la pression de suralimentation souhaitée. On évite ainsi une chute de la pression commandée par l'actuateur lent au moment du lever de pied pour le changement de rapport.

Bien entendu, l'invention ne se limite pas aux détails du mode de réalisation qui vient d'être exposé à titre de simple exemple et peut, en particulier, s'appliquer à tout type de moteur et de boîte de vitesses.

## Revendications

1. Procédé de contrôle du fonctionnement d'un groupe moto-propulseur de véhicule, comportant un moteur d'entrainement, une boîte de vitesse manuelle à plusieurs rapports et un embrayage, dans lequel un système de contrôle avec calculateur détermine une puissance cible à fournir par le groupe moto-propulseur en fonction d'une information (2) correspondant à la volonté du conducteur, affichée sur une entrée du calculateur, **caractérisé par le fait que**, l'information de volonté du conducteur est figée lorsque le conducteur lève le pied de l'accélérateur pour un débrayage lors d'un changement de rapport, de façon que le système de contrôle ne puisse pas tenir compte, le cas échéant, d'une information perturbatrice (20) affichée sur le calculateur entre l'instant d'ouverture t₂ et l'instant de fermeture t'₂ de l'embrayage, pour la détermination de la puissance cible à fournir.

2. Procédé de contrôle selon la revendication 1, **caractérisé par le fait que** l'information de volonté (2) exprimée à chaque instant par le conducteur est retardée et que le calculateur du système de contrôle reçoit simultanément, à chaque instant, une information de volonté (21) exprimée à cet instant par le conducteur et une information précédente retardée (32) et, après comparaison, tient compte seulement de l'information correspondant à une augmentation de la puissance cible.

3. Procédé de contrôle selon la revendication 2, **caractérisé par le fait que** le calculateur du système de contrôle détecte, à chaque instant, l'état ouvert ou fermé de l'embrayage, que, à l'instant t'₂ de détection de l'ouverture de l'embrayage, l'information de volonté (32) retardée jusqu'à cet instant est figée jusqu'à l'instant de fermeture t'₂ et que l'information retardée ainsi maintenue à une valeur constante (32) est comparée en permanence à la valeur de l'information de volonté immédiate (21) affichée à chaque instant, de façon à ne tenir compte que de la plus grande des deux valeurs (5) pour la détermination de la puissance cible.

4. Procédé de contrôle selon la revendication 3, **caractérisé par le fait que** le temps de retard (θ) imposé à l'information de volonté du conducteur est au moins égal au temps nécessaire à la détection de l'état ouvert de l'embrayage.

5. Procédé de contrôle selon l'une des revendications précédentes, **caractérisé par le fait que** l'information de volonté du conducteur est un signal (2) correspondant à la position de la pédale d'accélérateur du véhicule et que le système de contrôle ne tient pas compte d'une information perturbatrice (20) résultant d'un lever de pied rapide de la pédale d'accélérateur.

6. Procédé de contrôle selon l'une des revendications 1 à 4, **caractérisé par le fait que** l'information de volonté du conducteur est une consigne de puissance cible (6) servant à la commande d'un actuateur lent pour un moteur à turbocompression et que le système de contrôle ne tient pas compte, pour la commande de l'actuateur, d'une chute (61) de la consigne-cible résultant d'un lever de pied rapide de la pédale d'accélération pour le changement de vitesse.

7. Procédé de contrôle selon la revendication 6, **caractérisé par le fait qu'**un signal d'information (6) correspondant à une consigne cible est affiché à chaque instant sur le calculateur du système de contrôle, que ce signal instantané est retardé d'un temps (θ)au moins égal au temps nécessaire à la détection de l'état ouvert ou fermé de l'embrayage et que le signal retardé (6') est figé entre l'instant d'ouverture et l'instant de fermeture de l'embrayage, de façon que le calculateur reçoive simultanément un signal instantané de volonté (6) et un signal retardé (63) maintenu à une valeur constante et, après comparaison, maintient la consigne de pression à sa valeur maximale pendant le temps d'ouverture de l'embrayage.

## Claims

1. Method of controlling the operation of a vehicle powertrain, comprising a driving engine, a multi-speed manual gearbox and a clutch, in which a control system with a computer determines a target power to be provided by the powertrain as a function of information (2) corresponding to the intention of the driver and displayed on an input of the computer, **characterized in that** the information relating to the intention of the driver is frozen when the driver releases his foot from the accelerator for declutching during a change of gear ratio, such that the control system cannot take account, should the case arise, of disturbing information (20) displayed on the computer between the clutch opening instant t₂ and the clutch closing instant t'₂ in order to determine the target power to be provided.

2. Control method according to Claim 1, **characterized in that** the intention-related information (2) expressed at each instant by the driver is delayed and **in that** the computer of the control system simultaneously receives, at each instant, intention-related information (21) expressed at this instant by the driver and delayed preceding information (32) and, after comparison, takes account only of the information corresponding to an increase in the target power.

3. Control method according to Claim 2, **characterized in that** the computer of the control system detects, at each instant, the open or closed state of the clutch, **in that**, at the instant t₂ of detecting the opening of the clutch, the intention-related information (32) delayed until this instant is frozen until the closing instant t'₂, and **in that** the delayed information thus maintained at a constant value (32) is permanently compared with the value of the immediate intention-related information (21) displayed at each instant, so as to take account only of the larger of the two values (5) in order to determine the target power.

4. Control method according to Claim 3, **characterized in that** the delay time (θ) imposed on the information relating to the intention of the driver is at least equal to the time necessary for detecting the open state of the clutch.

5. Control method according to one of the preceding claims, **characterized in that** the information relating to the intention of the driver is a signal (2) corresponding to the position of the accelerator pedal of the vehicle, and **in that** the control system does not take account of disturbing information (20) resulting from a quick foot release from the accelerator pedal.

6. Control method according to one of Claims 1 to 4, **characterized in that** the information relating to the intention of the driver is a target power setpoint (6) serving to control a slow actuator for a turbocharged engine, and **in that** the control system does not take account, for the control of the actuator, of a fall (61) in the target setpoint resulting from a quick foot release from the acceleration pedal for the gear change.

7. Control method according to Claim 6, **characterized in that** an information signal (6) corresponding to a target setpoint is displayed at each instant on the computer of the control system, **in that** this instantaneous signal is delayed by a time (θ) at least equal to the time necessary for detecting the open or closed state of the clutch, and **in that** the delayed signal (6') is frozen between the clutch opening instant and the clutch closing instant, such that the computer simultaneously receives an instantaneous intention-related signal (6) and a delayed signal (63) maintained at a constant value and, after comparison, maintains the pressure setpoint at its maximum value during the clutch opening time.

## Patentansprüche

1. Verfahren zum Steuern des Betriebs einer Fahrzeug-Leistungseinheitsgruppe, die einen Antriebsmotor, ein manuelles Schaltgetriebe mit mehreren Gängen und eine Kupplung aufweist, bei dem ein Steuersystem mit einem Rechner eine Zielleistung bestimmt, die von der Leistungseinheitsgruppe in Abhängigkeit von einer Information (2) zu liefern ist, die dem Wunsch des Fahrers entspricht, die auf einem Eingang des Rechners angezeigt ist, **dadurch gekennzeichnet, dass** die Wunschinformation des Fahrers einfriert, wenn der Fahrer den Fuß für ein Auskuppeln bei einem Gangwechsel von dem Gaspedal hebt, so dass das Steuersystem gegebenenfalls eine Störinformation (20), die auf dem Rechner zwischen dem Öffnungszeitpunkt t₂ und dem Schließzeitpunkt t'₂ der Kupplung angezeigt wird, zum Bestimmen der zu liefernden Leistung nicht berücksichtigen kann.

2. Steuerverfahren nach Anspruch 1, **dadurch gekennzeichnet, dass** die Wunschinformation (2), die in jedem Augenblick von dem Fahrer ausgedrückt wird, verzögert wird, und dass der Rechner des Steuersystems gleichzeitig in jedem Augenblick eine Wunschinformation (21) empfängt, die in diesem Augenblick von dem Fahrer ausgedrückt wird, und eine vorhergehende verzögerte Information (32), und nach Vergleich nur die Information berücksichtigt, die einer Steigerung der Zielleistung entspricht.

3. Steuerverfahren nach Anspruch 2, **dadurch gekennzeichnet, dass** der Rechner des Steuersystems in jedem Augenblick den offenen oder geschlossenen Zustand der Kupplung erfasst, dass im Augenblick t₂ des Erfassens der Öffnung der Kupplung die Wunschinformation (32), die bis zu diesem Zeitpunkt verzögert wird, bis zu dem Augenblick des Schließens t'₂ einfriert, und dass die so auf einem konstanten Wert (32) gehaltene Information ständig mit dem unmittelbaren Wert der Wunschinformation (21), der in jedem Augenblick angezeigt wird, derart verglichen wird, dass nur der größere der zwei Werte (5) für das Bestimmen der Zielleistung berücksichtigt wird.

4. Steuerverfahren nach Anspruch 3, **dadurch gekennzeichnet, dass** die Verzögerungszeit (θ), die der Wunschinformation des Fahrers auferlegt wird, mindestens gleich der Zeit ist, die für das Erfassen des offenen Zustands der Kupplung erforderlich ist.

5. Steuerverfahren nach einem der vorhergehenden Ansprüche, **dadurch gekennzeichnet, dass** die Wunschinformation des Fahrers ein Signal (2) ist, das der Position des Gaspedals des Fahrzeugs entspricht, und dass das Steuersystem eine Störinformation (20), die sich durch ein schnelles Abheben des Fußes von dem Gaspedal ergibt, nicht berücksichtigt.

6. Steuerverfahren nach einem der Ansprüche 1 bis 4, **dadurch gekennzeichnet, dass** die Wunschinformation des Fahrers ein Zielleistungssollwert (6) ist, der zum Steuern eines langsamen Reglers für einen Turboladermotor dient, und dass das Steuersystem für das Steuern des Reglers ein Absinken (61) des Zielsollwerts, das sich aus einem schnellen Abheben des Fußes von dem Gaspedal für den Gangwechsel ergibt, nicht berücksichtigt.

7. Steuerverfahren nach Anspruch 6, **dadurch gekennzeichnet, dass** ein Informationssignal (6), das einem Zielsollwert entspricht, in jedem Augenblick auf dem Rechner des Steuersystems angezeigt wird, dass dieses Momentansignal um eine Zeit (θ) verzögert wird, die mindestens gleich der Zeit ist, die für das Erfassen des offenen oder des geschlossenen Zustands der Kupplung erforderlich ist, und dass das verzögerte Signal (6') zwischen dem Augenblick des Öffnens und dem Augenblick des Schließens der Kupplung derart einfriert, dass der Rechner gleichzeitig ein Momentanwunschsignal (6) und ein verzögertes Signal (63), das auf einem konstanten Wert gehalten wird, erhält, und nach dem Vergleich den Drucksollwert während der Öffnungszeit der Kupplung auf seinem maximalen Wert hält.
